# EUROPEAN PATENT APPLICATION

(11) **EP 1 302 413 A1**
(43) Date of publication of application: **16.04.2003**
(21) Application number: 02445126.2
(22) Date of filing: 09.10.2002
(51) Int. Cl.: B65F 1/14

(54) **A level sensing and indicating arrangement**

(30) Priority: 15.10.2001 SE 0103422
(71) Applicant: Jacobsen Innovation AB, S-183 56 Täby (SE)
(72) Inventor: Jocobsen, Hans, S-183 56 Täby (SE)
(74) Representative: Örtenblad, Bertil Tore

(57) **Abstract**

An arrangement for detecting and indicating the level of the contents of a container (1), whereby a detecting device (2) is fixedly mounted in the container (1), the detecting device includes light-emitting elements (8-11) and light-sensitive elements (12-15) at at least one predetermined level (6,7), the light-emitting elements (8-11) are adapted to emit light in a plane parallel with the bottom of the container in at least two different directions, the light-sensitive elements (12-15) are adapted to sense emitted light that has been reflected by the container contents, when detecting said reflected light the light-sensitive elements (12-15) function to send an electric signal to an indicating device (16) which includes a transmitter (17) for a mobile telephone system, and the indicating device (16) is adapted to send information that includes the identity of the container (1) via a telephone system to a central computer unit (18) separate from the container (1).

## Description

The present invention relates to an arrangement for detecting and indicating the content level of a container.

There is a need to detect the level of the contents of all kinds of containers. This particularly applies to the kinds of containers that are placed at geographically dispersed places and when it is necessary to empty containers that have been filled to a given level.

Examples of such containers include those that are used to recycle newsprint, cardboard, glass and metal packaging. Such containers are emptied with the aid of vehicles that travel to a number of containers on a container-emptying route. The present invention is described below with reference to such a container used for recycling glass bottles.

It will be understood, however, that the invention is not restricted to its use in respect of such containers, but can be applied with containers of mutually different kinds with which the invention can be suitably applied. For example, the invention can be applied in respect of garbage containers, different industrial collection containers, silos of different kinds, etc.

In the case of recycling containers, there is a need to indicate when the container contents have reached a given level, where the container is situated, how often the container is emptied, and other statistical information.

It will be obvious that this information is necessary in order for container emptying rounds to be effective. Such emptying rounds are, at present, carried out without knowing the extent to which containers have been filled. This results in ineffective emptying rounds. It is often the case that when containers have been filled completely, people place bottles outside the container.

These problems are solved by means of the present invention.

Thus, the present invention relates to an arrangement for sensing and indicating the level of the contents of a container, and is characterised in that a sensor is fixedly attached to the container; in that the arrangement includes light-emitting and light-sensitive elements located at at least one predetermined level; in that the light-emitting elements are adapted to emit light in a plane parallel with the bottom of the container in at least two different directions; in that the light sensitive elements are adapted to detect emitted light that has been reflected by the container contents; in that the light-sensitive elements are adapted to send an electric signal to an indicating device in response to detection of said reflected light, said indicating device including a transmitter for a mobile telephone system; and in that the indicating device is adapted to transfer information concerning the identity of the container via the telephone system; and in that the predetermined level is known to a central computer unit separate from the container.

The invention will now be described in more detail partly with reference to an exemplifying embodiment of the invention illustrated in the accompanying drawing, in which
- Figure 1 illustrates a container with which the invention is applied;
- Figure 2 illustrates the lower part of a detecting arrangement according to the invention;
- Figure 3 is a sectional view taken on the line A-A in Figure 2; and
- Figure 4 is a schematic illustration of a communications link.

As earlier mentioned, the invention is described in connection with a container for glass bottles. It will be understood, however, as mentioned that the invention is not limited to this particular use.

Moreover, the invention can be applied to detect and indicate a lowest permitted container content level. For example, the invention can be applied to detect and indicate a lowest level of the content of a container intended for road sand or road salt, or of a container used in an industrial process.

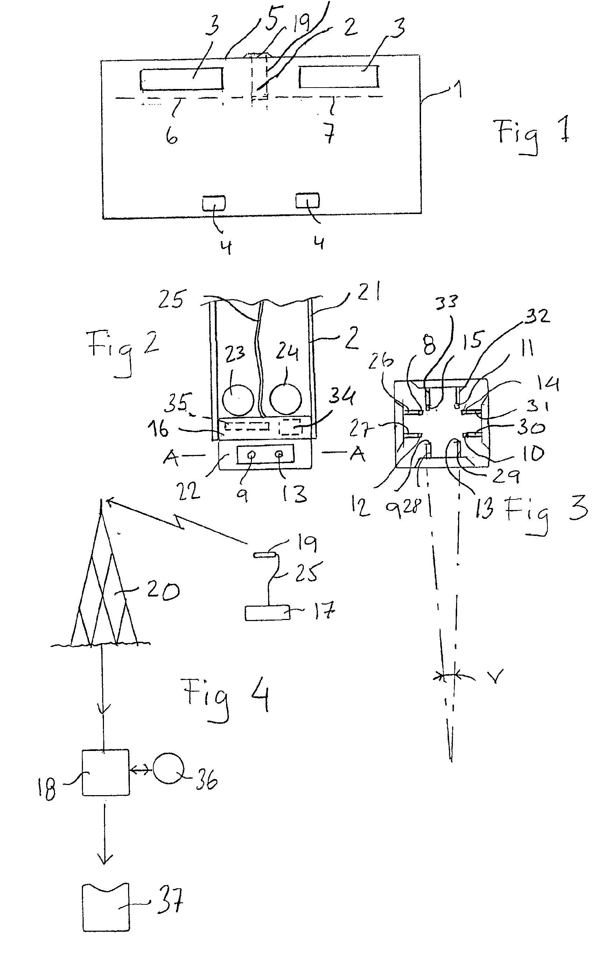

Figure 1 shows a container 1 which is provided with an arrangement 2 for detecting and indicating the level of the contents of the container. Reference numeral 3 identifies openings through which the material that is to fill up the container is passed into the container. Reference numeral 4 identifies recesses for co-action with the forks of a forklift truck. These containers are normally made of plastic or metal.

According to the invention, a detecting arrangement 2 is fixedly mounted in the container. As shown in Figure 1, the detecting arrangement is fastened to the container roof 5 and projects down slightly into the container.

As will be seen from Figures 2 and 3, the detecting arrangement 2 includes light-emitting elements 8-11 and light-sensitive elements 12-15 situated at at least one predetermined level in the container. Such a level is shown in broken lines 6, 7 in Figure 1. This is the level to be detected. It has been found that a suitable level corresponds to the level at which the container is filled to about 80% of its capacity.

The light-emitting elements are adapted to emit light in a plane that is parallel with the bottom of the container in at least two different directions. One such plane corresponds to the level 6, 7.

Further, the light-sensitive elements 12-15 are adapted to detect emitted light that has been reflected by the container contents. When detecting this reflected light, the light-sensitive elements are provided to send an electric signal to an indicating device 16. The indicating device 16 includes a transmitter 17 for a mobile telephone system. There is suitably used a GSM system or some corresponding system.

The level indicating device 16 is adapted to send via the telephone system information that discloses the identity of the container. The predetermined level is known to a central computer unit 18 separate from the container 1. Figure 4 illustrates said transmitter 17, an antenna 19, and a base station connected conventionally to a fixed telephone network. Reference numeral 36 identifies a database that includes the identities and geographical positions of all containers.

As will be understood, the invention causes a central unit to receive information disclosing those containers that have been filled to an extent that corresponds at least to said level.

The sensing arrangement includes an extruded tube 21 of square cross-section, which is attached to the container via an attachment means in the upper part of the tube. The container roof or ceiling 5 will preferably include a hole through which an antenna lead can be passed, with the antenna 19 mounted on the roof 5.

The elements 8-15 are placed at the bottom of the tube 21, as shown in Figure 2. The elements are placed in a block-like body 22 inserted and fastened in the tube 21. The block may be made of metal or of a high-strength plastic. The requisite electronic circuits and batteries 23, 24 are mounted on the block 22. Reference numeral 25 identifies an antenna lead.

In one preferred embodiment of the invention, four light-emitting elements 8-11 are adapted to emit light in four directions mutually at right angles to each other. This provides a good indication of the amount of material in the container, as will be explained in more detail below.

According to a preferred embodiment, each of the light-sensitive elements 12; 13; 14; 15 is allotted a light-emitting element 8; 9; 10; 11.

It is highly preferred that the optical axes of each pair of light-emitting elements and light-sensitive elements define an angle with each other, such as to obtain a predetermined sensor coverage. This is illustrated in Figure 3 in respect of one such pair of elements 9, 13. The angle v may be from 2 to 6 degrees, for instance. This means, among other things, that reflections against the inner surfaces of the container walls will not affect the sensing operation. It has further been found sufficient to sense said level within a distance from the tube 21 of about 0.5 m, since glass bottles and similar material tend to move in the container so that an approximately even level is obtained in the container.

Should the material in the container be positioned unevenly, so that the level slopes towards the horizontal plane, the level can be sensed as being exceeded in one direction but not in another direction. It is therefore important to sense the level in at least two directions.

However, it is preferred that said signal is sent to the level indicating device 17 when three of the four light-sensitive elements sense the container contents.

According to a highly preferred embodiment of the invention, the optical axes are formed through channels 26-33 in the body 22. Respective elements 8-15 are placed at the bottom of respective channels.

Different light-emitting and light-sensitive elements can be used. However, it is preferred to use light-diodes that emit infrared light, and corresponding photodetectors.

The level sensing or detecting arrangement is controlled by a processor 34, which actuates the light-emitting elements successively and reads the light-sensitive elements. Reading of said elements preferably takes place over a very short period of time, in view of the energy consumption involved. A number of daily readings will normally suffice. The containers are emptied once or twice a week in the case of recycled glass.

The indicating device 17 includes a GSM board 35, which functions to send said information to the central computer 18 in the form of a so-called SMS message.

The container is emptied after the detecting element has indicated that the aforesaid level has been reached and has sent an SMS message. At the subsequent first reading, the detecting element will indicate that said level has not been reached, due to the fact that the container is more or less empty. It is preferred that this state of the container is also sent to the central computer in an SMS message.

It will be obvious that the present invention solves the problems mentioned in the introduction and results in effective handling of the containers concerned. For example, the central computer can be programmed to print out a driving schedule 37 for the driver whose task it is to empty the containers.

Although the invention has been described above with reference to a number of exemplifying embodiments thereof, it will be obvious to the person skilled in this art that modifications can be made with respect among other things to the area of use of the container.

The present invention is therefore not restricted to the aforedescribed embodiments, but can be varied and modified within the scope of the accompanying Claims.

## Claims

1. An arrangement for detecting and indicating the level of the contents of a container (1), **characterised in that** a detecting device (2) is fixedly mounted in the container (1); **in that** the detecting device includes light-emitting elements (8-11) and light-sensitive elements (12-15) at at least one predetermined level (6, 7); **in that** the light-emitting elements (8-11) are adapted to emit light in a plane parallel with the bottom of the container in at least two different directions; **in that** the light-sensitive elements (12-15) are adapted to sense emitted light that has been reflected by the container contents; **in that** when detecting said reflected light the light-sensitive elements (12-15) function to send an electric signal to an indicating device (16) which includes a transmitter (17) for a mobile telephone system; **in that** the indicating device (16) is adapted to send information that includes the identity of the container (1) via the telephone system; and **in that** the predetermined level (6, 7) is known to a central computer unit (18) separate from the container (1).

2. An arrangement according to Claim **1, characterised in that** there are provided four light-emitting elements (8-11) adapted to emit light in four directions at right angles to each other.

3. An arrangement according to Claim 1 or 2, **characterised in that** each of the light-sensitive elements (12-15) is allocated a light-emitting element (8-11).

4. An arrangement according to Claim 3, **characterised in that** the optical axes of each pair of light-emitting (8-11) and light-sensitive (12-15) elements define an angle (v) with each other such as to obtain a predetermined sensor coverage.

5. An arrangement according to Claim 4, **characterised in that** said optical axes are formed through the medium of channels (26-33); and **in that** respective elements (8-15) are placed at the bottom of respective channels.

6. An arrangement according to Claim 1, 2, 3, 4 or 5, **characterised in that** the light emitted is infrared light.

7. An arrangement according to Claim 2, 3, 4, 5 or 6, **characterised in that** said signal is sent to the indicating device (16) when three of said four light-sensitive elements (11-15) sense the contents of the container (1).

8. An arrangement according to any one of the preceding Claims, **characterised in that** the indicating device (16) is adapted to send said information to the central computer (18) in the form of an SMS message.
